# DEMANDE DE BREVET EUROPEEN

(11) **EP 4 745 901 A1**
(43) Date de publication de la demande: **20.05.2026**
(21) Numéro de dépôt: 25215320.0
(22) Date de dépôt: 12.11.2025
(51) Int. Cl.: G06V 10/20, G06V 10/82, G06V 20/58, G06V 10/776

(54) **PROCÉDÉ DE DÉTECTION D'OBSTACLE SUR UNE VOIE, PROGRAMME D'ORDINATEUR ET DISPOSITIF DE DÉTECTION D'OBSTACLE ASSOCIÉ**

(30) Priorité: 14.11.2024 FR 2412438
(71) Demandeur: Société Nationale SNCF, 93200 Saint-Denis (FR)
(72) Inventeur: BOUNEDJAR, Temmy, 92120 MONTROUGE (FR); AMMAD, Nadia, 75012 PARIS (FR); DAVID, Philippe, 27460 ALIZAY (FR); BRAQUEHAYS, Pierre, 94200 IVRY-SUR-SEINE (FR); MADAH, Ilyas, 91190 GIF-SUR-YVETTE (FR); ANDEOL, Léo, 31400 TOULOUSE (FR); ROUSSEAU, Tom, 93210 SAINT-DENIS (FR)
(74) Mandataire: IPAZ

(57) **Abrégé**

L'invention concerne un procédé (2) de détection d'obstacle sur une voie, comprenant, pour au moins une image courante représentative de la voie, les étapes :
- mise en œuvre (32) d'un modèle de détection d'anomalie pour détecter la présence ou non, dans une région d'intérêt de l'image courante, d'un élément formant une anomalie ;
- en cas de détection d'une anomalie, mise en œuvre (36) d'un algorithme de classification pour déterminer l'appartenance ou non de l'anomalie détectée à une classe critique, par la mise en œuvre d'au moins un traitement prédéterminé, l'anomalie étant considérée comme appartenant à la classe critique si l'algorithme de classification détermine que l'anomalie n'appartient à aucune parmi au moins une classe d'objet connu non critique prédéterminée ;
- s'il est déterminé que l'anomalie détectée appartient à la classe critique, génération (40) d'un signal d'alerte indicatif de la présence d'un obstacle sur la voie.

## Description

### Domaine technique

La présente invention concerne un procédé de détection d'obstacle sur une voie.

L'invention concerne également un programme d'ordinateur et un dispositif mettant en œuvre un tel procédé.

L'invention s'applique au domaine de la conduite automatique de véhicule, en particulier de la conduite automatique d'un véhicule ferroviaire.

### État de la techniaue

Dans une optique d'automatisation de la conduite, notamment la conduite d'un véhicule ferroviaire, se pose la question sécuritaire de la gestion des obstacles susceptibles de se trouver sur le trajet du véhicule.

Pour répondre à une telle question, il a été proposé de recourir à un procédé de détection automatique d'obstacles, dans lequel des images de la voie sont fournies en entrée d'un modèle de classification entraîné pour reconnaître des obstacles.

Néanmoins, un tel procédé ne donne pas entière satisfaction.

En effet, la détection d'obstacle est une fonction qui s'exerce en milieu ouvert, la voie n'étant pas séparée du reste du monde par une clôture constante ou un tunnel permanent (comme dans le cas du métro). Il en résulte que les classes d'obstacles susceptibles d'être rencontrées par le véhicule sont imprédictibles, et le nombre d'obstacles potentiels infini. Par conséquent, un entraînement exhaustif du modèle de classification n'est pas envisageable, et un fonctionnement sécuritaire ne peut donc pas être assuré de cette façon.

En outre, un modèle d'intelligence artificielle, tel qu'un modèle de classification, est une fonction mathématique complexe généralement inintelligible pour un humain. Il en résulte qu'une décision prise par le modèle de classification ne peut être interprétée, ce qui est préjudiciable à un fonctionnement sécuritaire, en particulier lorsqu'une décision prise par le modèle de classification est en désaccord avec la situation réelle.

Un but de la présente invention est de remédier à au moins un des inconvénients de l'état de la technique.

Un autre but de l'invention est de proposer un procédé de détection d'obstacles sur une voie qui soit en mesure de détecter tout type d'obstacle susceptible de présenter un danger.

Un autre but de l'invention est de proposer un procédé de détection d'obstacles apte à produire des informations indicatives du processus de décision mis en œuvre.

### Exposé de l'invention

À cet effet, l'invention concerne un procédé du type précité, le procédé étant mis en œuvre par ordinateur et comprenant, pour au moins une image courante représentative de la voie, les étapes :
- mise en œuvre d'un modèle de détection d'anomalie pour détecter la présence ou non, dans une région d'intérêt de l'image courante, d'un élément formant une anomalie ;
- en cas de détection d'une anomalie, mise en œuvre d'un algorithme de classification pour déterminer l'appartenance ou non de l'anomalie détectée à une classe critique, par la mise en œuvre d'au moins un traitement prédéterminé, l'anomalie étant considérée comme appartenant à la classe critique si l'algorithme de classification détermine que l'anomalie n'appartient à aucune parmi au moins une classe d'objet connu non critique prédéterminée ;
- s'il est déterminé que l'anomalie détectée appartient à la classe critique, génération d'un signal d'alerte indicatif de la présence d'un obstacle sur la voie.

En effet, grâce à la mise en œuvre du modèle de détection d'anomalie, une détection rapide de tout objet perturbant une apparence dite « normale » de la voie est réalisée.

Puis, grâce à la mise en œuvre de l'algorithme de classification, une comparaison de l'anomalie avec une liste finie et exhaustive de classes d'objets non critiques connues est possible. Dans ce cas, la non appartenance de l'anomalie à l'une des classes d'objets non critiques connues crée une suspicion de criticité, générant un signal d'alerte appelant un traitement ultérieur, tel qu'un arrêt du véhicule, un traitement par un algorithme d'identification plus performant (mais moins rapide), etc.

Ainsi, la connaissance exhaustive de tout objet susceptible de se trouver sur la voie n'est pas requise, et un fonctionnement sécuritaire est possible.

De façon avantageuse, le procédé selon l'invention présente une ou plusieurs des caractéristiques suivantes, prises isolément ou selon toute combinaison techniquement possible :

le procédé comprend, préalablement à l'étape de mise en œuvre du modèle de détection d'anomalie, une étape d'identification de la partie de l'image courante correspondant à la voie, la partie identifiée formant la région d'intérêt ;

le procédé comprend, en outre, après l'étape de mise en œuvre du modèle de détection d'anomalie, une étape de consolidation de la détection d'anomalie comportant :
- un calcul d'une zone de confiance correspondant à la partie de l'image courante dans laquelle la détection de l'anomalie, par le modèle de détection d'anomalie, présente un niveau de confiance de détection prédéterminé ; et/ou
- un calcul d'une zone d'explicabilité de détection, à partir d'une carte d'explicabilité de détection indicative de la contribution de chaque élément de l'image dans la détection de l'anomalie ;
la détection de l'anomalie étant considérée comme consolidée si :
- l'anomalie détectée est incluse dans la zone de confiance calculée ; et/ou
- un score de proximité, au regard d'une métrique de proximité prédéterminée, entre l'anomalie détectée et la zone d'explicabilité de détection calculée est supérieur à un seuil de proximité de détection prédéterminé ;

le procédé comprend, si l'anomalie détectée appartient à la classe critique :
- une détermination, à partir de l'image courante, d'un niveau d'innocuité de l'anomalie détectée ; et
- une inclusion du niveau d'innocuité déterminé dans le signal d'alerte ;

l'algorithme de classification est un modèle de classification, le procédé comprenant, en outre, après la mise en œuvre de l'algorithme de classification, une étape de consolidation de classification comportant :
- un calcul d'un ensemble de classes de confiance, correspondant aux classes pour lesquelles une classification de l'anomalie détectée dans l'une desdites classes de confiance, par le modèle de classification, présente un niveau de confiance de classification prédéterminé ; et/ou
- un calcul d'une zone d'explicabilité de classification, à partir d'une carte d'explicabilité de classification indicative de la contribution de chaque élément de l'image dans la classification de l'anomalie ;
la classification de l'anomalie étant considérée comme consolidée si :
- la classe affectée à l'anomalie détectée appartient à l'ensemble de classes de confiance ; et/ou
- un score de proximité, au regard d'une métrique de proximité prédéterminée, entre l'anomalie détectée et la zone d'explicabilité de classification calculée est supérieur à un seuil de proximité de classification prédéterminé ;

le procédé comprend, en outre, les étapes :
- mise en œuvre d'un modèle de détection d'objets ouverte pour détecter la présence ou non d'un objet dans la région d'intérêt de l'image courante ;
- si un objet est détecté par le modèle de détection d'objets ouverte, et une anomalie est détectée par le modèle de détection d'anomalie, comparaison d'au moins une caractéristique de l'objet détecté à au moins une caractéristique correspondante de l'anomalie détectée ; et
- association d'un attribut à l'anomalie détectée, en fonction d'un résultat de la comparaison ;

si l'anomalie détectée appartient à la classe critique, l'attribut associé à l'anomalie est représentatif d'un degré de confiance dans la détection de l'anomalie en tant qu'obstacle ;

le procédé comprend, en outre, en cas de détection d'un objet par le modèle de détection d'objets ouverte :
- un calcul d'une boîte englobante de confiance, correspondant à la partie de l'image courante dans laquelle la détection de l'objet, par le modèle de détection d'objets ouverte, présente un niveau de confiance de classification prédéterminé ; et/ou
- un calcul d'une zone d'explicabilité de détection ouverte, à partir d'une carte d'explicabilité de détection ouverte indicative de la contribution de chaque élément de l'image dans la détection de l'objet ;
la détection de l'objet étant considérée comme consolidée si :
- l'objet détecté est inclus dans la boîte englobante de confiance ; et/ou
- un score de proximité, au regard d'une métrique de proximité prédéterminée, entre la boîte englobante associée à l'objet détecté et la zone d'explicabilité de détection ouverte calculée est supérieur à un seuil de proximité de détection ouverte prédéterminé.

Selon un autre aspect de l'invention, il est proposé un programme d'ordinateur comprenant des instructions exécutables qui, lorsqu'elles sont exécutées par ordinateur, mettent en œuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif informatique pour la détection d'obstacle sur une voie, configuré de façon à, pour au moins une image courante représentative de la voie :
- mettre en œuvre un modèle de détection d'anomalie pour détecter la présence ou non, dans une région d'intérêt de l'image courante, d'un élément formant une anomalie ;
- en cas de détection d'une anomalie, mettre en œuvre un algorithme de classification pour déterminer l'appartenance ou non de l'anomalie détectée à une classe critique, par la mise en œuvre d'au moins un traitement prédéterminé, l'anomalie étant considérée comme appartenant à la classe critique si l'algorithme de classification détermine que l'anomalie n'appartient à aucune parmi au moins une classe d'objet connu non critique prédéterminée ;
- s'il est déterminé que l'anomalie détectée appartient à la classe critique, générer un signal d'alerte indicatif de la présence d'un obstacle sur la voie.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est un ordinogramme d'un procédé de détection d'obstacle sur une voie selon l'invention ;
la figure 2 est une représentation schématique d'un dispositif mettant en œuvre le procédé de la figure 1 ;
la figure 3 est une vue schématique de dessus d'une voie ferrée pour laquelle le procédé de la figure 1 est mis en œuvre ;

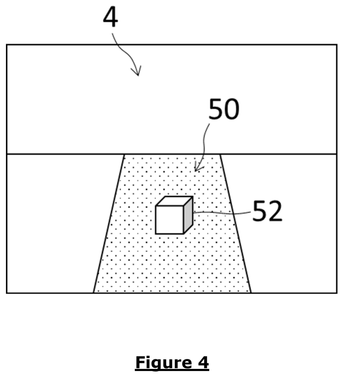

la figure 4 est une représentation schématique d'une voie comprenant un obstacle, telle que vue par une caméra embarquée à bord d'un véhicule se déplaçant sur la voie.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

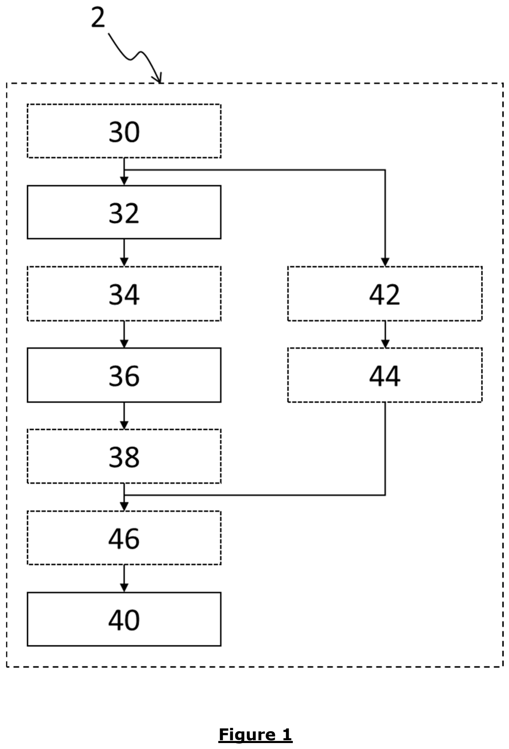

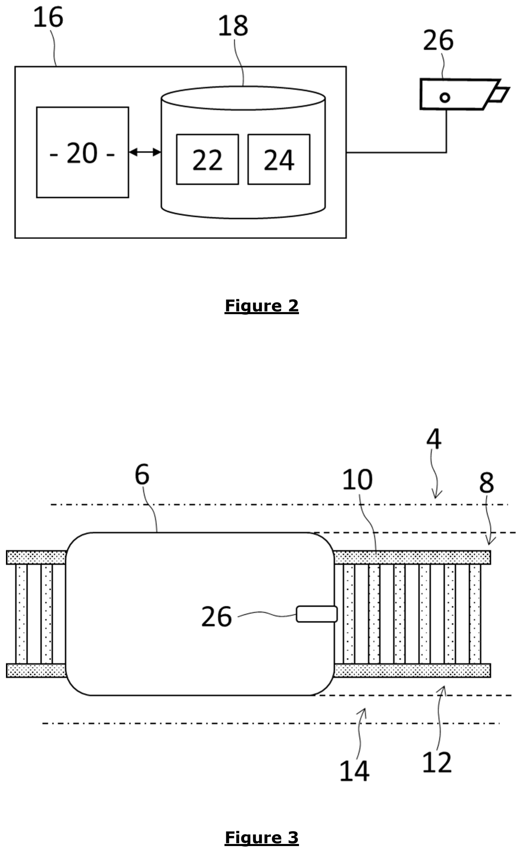

Un procédé 2 de détection d'obstacle selon l'invention est illustré par la figure 1. Plus précisément, le procédé 2 est un procédé de détection d'obstacle sur une voie 4 (figure 3).

Par « voie », il est entendu, au sens de la présente invention, tout espace prévu pour être parcouru par un véhicule 6, en particulier un véhicule automobile ou un véhicule ferroviaire.

Un tel espace correspond, de préférence, à un aménagement destiné à recevoir le véhicule, augmenté d'un gabarit dynamique 12 du véhicule et, éventuellement, d'une marge de sécurité 14 supplémentaire pour la protection des opérateurs.

Par exemple, et comme illustré par la figure 3, dans le cas d'une voie ferrée 8 destinée à être parcourue par le véhicule 6 (en l'occurrence, un véhicule ferroviaire), la voie 4 est définie comme l'espace délimité par des rails 10 de la voie ferrée 8 et, de préférence, augmenté latéralement d'une emprise au sol du véhicule 6 (gabarit dynamique 12), ainsi que de la marge de sécurité 14.

Le procédé de détection 2 est susceptible d'être mis en œuvre par tout dispositif informatique 16 (figure 2) comprenant une mémoire 18 et un processeur 20 reliés entre eux.

Plus spécifiquement, la mémoire 18 est configurée pour stocker un programme de détection 22 selon l'invention. En outre, le processeur 20 est configuré pour exécuter des instructions du programme de détection 22 afin de mettre en œuvre le procédé de détection 2.

La mémoire 18 est, en outre, configurée pour stocker, dans un emplacement mémoire 24 correspondant, au moins une image, par exemple une image issue d'un flux vidéo représentatif d'une scène observée par une caméra 26 (figure 3).

En particulier, la caméra 26 est placée à l'avant du véhicule 6, de façon à acquérir une scène située en aval du véhicule 6, suivant le sens de déplacement du véhicule 6.

Comme indiqué précédemment, le dispositif informatique 16 est configuré pour mettre en œuvre le procédé de détection 2.

Plus précisément, le dispositif informatique 16 est configuré pour mettre en œuvre le procédé de détection 2 pour chaque image courante issue de la caméra 26 et représentative d'une situation opérationnelle courante. L'image courante 24 est, en particulier, disponible dans l'emplacement mémoire 24.

Comme illustré par la figure 1, le procédé de détection 2 comprend une étape 32 de mise en œuvre d'un modèle de détection d'anomalie (dite « étape de détection d'anomalie »), une étape 36 de classification d'anomalie (dite « étape de classification ») et une étape 40 de génération de signal d'alerte (dite « étape d'alerte »).

Avantageusement, le procédé de détection 2 comprend, en outre, une étape optionnelle 30 d'identification de voie (dite « étape d'identification »), antérieure à l'étape de détection d'anomalie 32.

Avantageusement, le procédé de détection 2 comprend, en outre, une étape optionnelle 34 de consolidation de détection d'anomalie, entre l'étape de détection d'anomalie 32 et l'étape de classification 36.

Avantageusement, le procédé de détection 2 comprend, en outre, une étape optionnelle 38 de consolidation de classification, entre l'étape de classification 36 et l'étape d'alerte 40.

Avantageusement, le procédé de détection 2 comprend, en outre, une étape optionnelle 42 de mise en œuvre d'un modèle de détection d'objets ouverte (dite « étape de détection ouverte »), postérieure à l'étape d'identification 30.

Avantageusement, dans le cas de la mise en œuvre de l'étape de détection ouverte 42, le procédé de détection 2 comprend, en outre, une étape optionnelle de consolidation de détection ouverte 44, postérieure à l'étape de détection ouverte 42.

Avantageusement encore, dans le cas de la mise en œuvre de l'étape de détection ouverte 42, le procédé de détection 2 comprend, en outre, une étape optionnelle de fusion 46, postérieure à l'étape de classification 36 et à l'étape de détection ouverte 42.

### Etape d'identification 30

Avantageusement, le dispositif informatique 16 est configuré de façon à identifier, au cours de l'étape d'identification, la partie de l'image courante qui correspond à la voie 4. Dans ce cas, la partie identifiée forme une région d'intérêt 50.

En particulier, pour identifier la voie 4, le dispositif informatique 16 est configuré pour exécuter tout algorithme adéquat connu de l'homme du métier, tout ou partie de l'image courante formant une entrée de l'algorithme.

Par exemple, dans le cas du transport ferroviaire, la voie 4 est une voie ferrée, et le dispositif informatique 16 est configuré pour exécuter l'algorithme Ego-Path afin d'identifier la voie 4.

Un tel algorithme est décrit par Thomas Laurent dans la prépublication digitale « *Train Ego-Path Detection on Railway Tracks Using End-to-End Deep Learning* », référencée arXiv:2403.13094.

En alternative, la région d'intérêt 50 est identifiée par tout moyen connu, automatisé ou manuel.

La mise en œuvre d'une telle étape est avantageuse, dans la mesure où elle contribue à limiter le domaine spatial dans lequel une anomalie va être recherchée. De cette façon, des objets présents dans l'image courante, mais non susceptibles d'interférer avec le véhicule 6, ne sont pas pris en compte.

### Etape de détection d'anomalie 32

En outre, le dispositif informatique 16 est configuré de façon à mettre en œuvre, au cours de l'étape de détection d'anomalie 32, un modèle de détection d'anomalie pour détecter la présence ou non, dans la région d'intérêt 50 identifiée, d'un élément formant une anomalie.

Par « anomalie », il est entendu, au sens de la présente invention, un objet 52 (c'est-à-dire un ensemble de pixels), défini comme un écart par rapport à une représentation statistique préalablement apprise de la normalité, dite « apparence normale » de la voie 4.

Par exemple, dans le cas d'une voie ferrée, une telle apparence normale correspond à une succession de traverses agencées entre deux rails et reposant sur du ballast.

De préférence, le modèle de détection d'anomalie a été entraîné sur la base d'un premier jeu de données d'entraînement comprenant une pluralité d'images, chacune représentative d'une voie considérée comme normale.

Par exemple, le modèle de détection d'anomalie comprend trois briques logicielles en série, la première brique présentant une architecture d'encodeur, la deuxième brique présentant une architecture de décodeur, et la troisième brique présentant une architecture de discriminateur.

Durant l'entraînement d'un tel modèle de détection d'anomalie, lesdites trois briques fonctionnent de façon hybride.

Plus précisément, dans une première phase de l'entraînement, l'encodeur et le décodeur fonctionnent conjointement comme un auto-encodeur variationnel (ou VAE, de l'anglais « *Variational Auto-Encoder* »), chargé de reconstruire grossièrement la normalité. Dans ce cas, le VAE apprend à saisir l'essentiel de la normalité en simplifiant (au moyen de son encodeur) et en reconstruisant (au moyen de son décodeur) les images normales fournies à son entrée.

En outre, dans une deuxième phase de l'entraînement, le décodeur et le discriminateur fonctionnent conjointement comme un réseau antagoniste génératif (ou GAN, de l'anglais « *Generative Adversarial Network* »), où le décodeur joue le rôle de générateur d'images, chargé de rendre les images reconstruites plus précises et réalistes que lors de la première phase. Dans ce cas, le GAN raffine la qualité de la reconstruction précédente, de sorte à rendre l'image plus réaliste et comparable avec l'image réelle initiale.

Dans ce cas, durant la phase d'inférence (c'est-à-dire le traitement de l'image courante par le modèle de détection entraîné), seuls l'encodeur et le décodeur sont mis en œuvre.

Lorsque, durant l'étape de détection d'anomalie 32, la région d'intérêt 50 comprend une anomalie 52, le modèle de détection d'anomalie cherche à rapprocher le plus possible l'image courante de celle d'une situation normale. L'image ainsi reconstruite diffère alors notablement de l'image courante initiale au voisinage de l'anomalie 52, ce qui permet de localiser ladite anomalie dans l'image courante.

### Etape de consolidation de détection d'anomalie 34

Avantageusement, dans le cas où une anomalie est détectée, le dispositif informatique 16 est configuré pour mettre en œuvre l'étape 34 de consolidation de détection d'anomalie afin de consolider la détection de l'anomalie 52 (c'est-à-dire vérifier que ladite détection soit certifiable au regard d'au moins un critère prédéterminé).

Plus précisément, le dispositif informatique 16 est configuré pour calculer une zone de confiance (correspondant à une segmentation de l'image).

Une telle zone de confiance correspond à la partie de l'image courante dans laquelle la détection de l'anomalie, par le modèle de détection d'anomalie, présente un niveau de confiance de détection prédéterminé (issu d'une qualification préalable du modèle de détection d'anomalie).

Par exemple, le niveau de confiance de détection prédéterminé vaut 95%.

Dans ce cas, le dispositif informatique 16 est configuré pour déterminer que la détection de l'anomalie 52 est consolidée si l'anomalie 52 détectée est incluse dans la zone de confiance.

En alternative, ou de façon complémentaire, le dispositif informatique 16 est configuré pour calculer une zone d'explicabilité de détection, à partir d'une carte d'explicabilité de détection relative à la détection de l'anomalie 52 (dans l'image courante) par le modèle de détection d'anomalie.

Par « carte d'explicabilité », il est entendu, au sens de la présente invention, une carte indicative de la contribution de chaque élément de l'image

(pixels, attributs, etc.) dans une prédiction (en l'occurrence, la détection de l'anomalie 52). Par exemple, une telle carte d'explicabilité est susceptible de correspondre à l'une parmi les cartes suivantes, connues de l'homme du métier sous leur dénomination anglaise : *saliency map* ou encore *contribution map.*

Par exemple, afin d'obtenir la zone d'explicabilité de détection, le dispositif informatique 16 est configuré pour mettre en œuvre un traitement comprenant :
- une extraction, en sortie du modèle de détection d'anomalie, de la carte d'explicabilité de détection relative à la détection de l'anomalie 52 (dans l'image courante) par le modèle de détection d'anomalie ; et
- un calcul, à partir de la carte d'explicabilité de détection extraite, de la zone d'explicabilité de détection correspondante.

Dans ce cas, une telle zone d'explicabilité de détection est définie comme la partie de la carte d'explicabilité de détection pour laquelle la contribution à la détection de l'anomalie, par le modèle de détection d'anomalie, est supérieure à un seuil de contribution de détection prédéterminé.

En variante, la zone d'explicabilité de détection est une sortie du modèle de détection d'anomalie.

En outre, la détection de l'anomalie 52 est considérée comme consolidée si un score de proximité, au regard d'une métrique de proximité prédéterminée, entre l'anomalie détectée et la zone d'explicabilité de détection calculée est supérieur à un seuil de proximité de détection prédéterminé.

Un tel score de proximité est d'autant plus grand que, dans l'espace considéré, l'anomalie 52 détectée et la zone d'explicabilité de détection correspondante sont proches, au regard d'une métrique de proximité prédéterminée.

Par exemple, un tel score de proximité résulte de la mise en œuvre d'une mesure de similarité prédéterminée, telle que la mesure d'indice de similarité de structure, ou SSIM (de l'anglais « *Structural Similarity Index Measure* »).

Selon un autre exemple, un tel score de proximité est une valeur d'autant plus grande que, dans l'image, l'anomalie 52 et les pixels associés à la zone d'explicabilité de détection sont proches, par exemple d'autant plus grande qu'une distance entre un barycentre de l'anomalie 52 et un pixel de l'image courante associé à un barycentre de la zone d'explicabilité de détection est faible.

Une telle étape de consolidation de détection est avantageuse, dans la mesure où, par la production de données explicatives du processus de décision lors de la détection, elle autorise une éventuelle certification (ou homologation) du dispositif informatique 16, ce qui est un prérequis en fonction sécuritaire.

### Etape de classification 36

Dans le cas où l'anomalie 52 est détectée, le dispositif informatique 16 est configuré de façon à mettre en œuvre, durant l'étape de classification 36, au moins un traitement prédéterminé pour déterminer l'appartenance ou non de l'anomalie 52 détectée à une classe critique.

Une telle classe critique est définie comme une classe regroupant tout élément n'ayant pas de légitimité à se trouver sur une voie (notamment une voie ferrée), par opposition à des objets non critiques sur la voie connus du gestionnaire de l'infrastructure.

Plus précisément, le dispositif informatique 16 est configuré pour mettre en œuvre un algorithme de classification pour déterminer si l'anomalie appartient à l'une parmi au moins une classe d'objet connu non critique prédéterminée.

Dans ce cas, l'anomalie 52 est considérée comme appartenant à la classe critique si l'algorithme de classification détermine que l'anomalie n'appartient à aucune classe d'objet connu non critique prédéterminée.

Par exemple, au moins une classe d'objet connu non critique est associée à un objet constitutif de la voie 4. Dans le cas d'une voie ferrée, un tel objet est, notamment, un rail, une traverse, ou encore le ballast.

Selon un autre exemple, au moins une classe d'objet connu non critique est associée à un objet susceptible de se trouver sur la voie 4, mais ne présentant pas de danger. Dans le cas d'une voie ferrée, un tel objet connu non critique est, par exemple, une balise, telle qu'une balise KVB (pour « *Contrôle de Vitesse par Balises* »), une balise ETCS (de l'anglais « *European Train Control System* », pour système européen de contrôle des trains), ou toute autre balise.

De préférence, pour réaliser une telle classification, le dispositif informatique 16 est configuré pour mettre en œuvre un modèle d'intelligence artificielle, et plus précisément un modèle de classification.

Plus précisément, un tel modèle de classification a été préalablement entraîné sur la base d'un deuxième jeu de données d'entraînement comprenant une pluralité d'images, chacune représentative d'un objet non critique, et, pour chaque image, une étiquette correspondante indicative de la classe à laquelle appartient l'objet non critique représenté.

Dans ce cas, pour chaque image du deuxième jeu de données d'entraînement fournie en entrée du modèle de classification durant son entraînement, l'étiquette correspondante forme la sortie attendue du modèle de classification.

En outre, le modèle de classification est paramétré pour affecter, à l'une parmi au moins une classe relative à des objets critiques, tout objet (et en particulier toute anomalie 52 détectée) qui ne correspondrait pas à l'une des classes d'objets connus non critiques prédéterminées.

En alternative, pour réaliser une telle classification, le dispositif informatique 16 est configuré pour comparer l'anomalie 52 détectée à chaque image de référence d'une banque d'images de référence prédéterminée. En particulier, chaque image de référence est représentative d'un objet de référence appartenant à une classe d'objet connu non critique prédéterminée respective.

Dans ce cas, le dispositif informatique 16 est configuré pour affecter l'anomalie 52 détectée à la classe correspondant à l'image de référence la plus similaire, si un résultat de la comparaison est supérieur à un seuil de similarité prédéterminé.

Sinon, il est déterminé que l'anomalie 52 détectée appartient à la classe critique.

De préférence, le dispositif informatique 16 est, en outre, configuré pour affecter un niveau d'innocuité à une anomalie considérée comme critique.

Par exemple, le dispositif informatique 16 est configuré pour déterminer si l'anomalie critique est une anomalie critique dangereuse (par exemple, une voiture) ou une anomalie critique sans impact sécuritaire (par exemple, une chaussure).

### La détermination du niveau d'innocuité va être brièvement décrite.

Selon un premier exemple, le dispositif informatique 16 est configuré pour calculer une distance, dans un espace latent de classification prédéterminé, entre l'anomalie détectée et au moins un cluster représentatif d'un objet connu dangereux. En outre, le dispositif informatique 16 est configuré pour déterminer que l'anomalie critique est dangereuse si ladite distance calculée est comprise entre un premier seuil de distinction et un deuxième seuil prédéterminé supérieur au premier seuil de distinction.

Selon un autre exemple, le dispositif informatique 16 est configuré pour évaluer, à partir de l'image courante, une caractéristique physique de l'anomalie critique détectée (en particulier, sa taille). En outre, le dispositif informatique 16 est configuré pour déterminer que l'anomalie détectée est une anomalie critique dangereuse en fonction de la caractéristique physique évaluée (par exemple, si sa taille est supérieure à une taille limite prédéterminée).

### Etape de consolidation de classification 38

Avantageusement, le dispositif informatique 16 est configuré pour mettre en œuvre l'étape 38 de consolidation de classification afin de consolider la classification de l'anomalie 52 (c'est-à-dire vérifier que ladite classification soit certifiable au regard d'au moins un critère prédéterminé).

En particulier (mais de façon non exclusive), le dispositif informatique 16 est configuré pour mettre en œuvre l'étape 38 si, à l'issue de l'étape de classification 36, l'anomalie 52 détectée est classée comme critique.

Plus précisément, le dispositif informatique 16 est configuré pour calculer un ensemble de classes de confiance.

Un tel ensemble de classes de confiance comprend la ou les classes (critique(s) et/ou non-critique(s)) telles que, si un résultat de la classification appartient à l'une desdites classes, alors ledit résultat présente un niveau de confiance de classification prédéterminé (issu d'une qualification préalable de modèle de classification).

Par exemple, le niveau de confiance de classification prédéterminé vaut 95%.

Dans ce cas, le dispositif informatique 16 est configuré pour déterminer que la classification de l'anomalie 52 est consolidée si la classe à laquelle est affectée l'anomalie 52 détectée appartient à l'ensemble de classes de confiance.

En alternative, ou de façon complémentaire, le dispositif informatique 16 est configuré pour calculer une zone d'explicabilité de classification, à partir d'une carte d'explicabilité de classification relative à la classification, par le modèle de classification, de l'anomalie 52 détectée.

Dans ce cas, la carte d'explicabilité de classification est une carte indicative de la contribution de chaque élément de l'image (pixels, attributs, etc.) dans la classification de l'anomalie 52. Comme indiqué précédemment, une telle carte d'explicabilité de classification est susceptible de correspondre à une carte dite « *saliency map* », ou encore à une carte dite « *contribution map* », connues de l'homme du métier.

Par exemple, afin d'obtenir la zone d'explicabilité de classification, le dispositif informatique 16 est configuré pour mettre en œuvre un traitement comprenant :
- une extraction, en sortie du modèle de classification, de la carte d'explicabilité de détection relative à la classification de l'anomalie 52 (dans l'image courante) par le modèle de classification ; et
- un calcul, à partir de la carte d'explicabilité de classification extraite, de la zone d'explicabilité de classification correspondante.

Dans ce cas, la zone d'explicabilité de classification est définie comme la partie de la carte d'explicabilité de classification pour laquelle la contribution à la classification de l'anomalie, par le modèle de classification, est supérieure à un seuil de contribution de classification prédéterminé.

En variante, la zone d'explicabilité de classification est une sortie du modèle de classification.

En outre, la classification de l'anomalie 52 est considérée comme consolidée si un score de proximité, au regard d'une métrique de proximité prédéterminée, entre l'anomalie détectée et la zone d'explicabilité de classification calculée est supérieur à un seuil de proximité de classification prédéterminé.

Un tel score de proximité est, par exemple, obtenu en utilisant l'une quelconque des fonctions décrites précédemment en relation avec la consolidation de la détection de l'anomalie 52.

Une telle étape de consolidation de détection est avantageuse, dans la mesure où, par la production de données explicatives du processus de décision lors de la classification, elle autorise une éventuelle certification (ou homologation) du dispositif informatique 16, ce qui est un prérequis en fonction sécuritaire.

### Etape de détection ouverte 42

**Avantageusement,** le dispositif informatique 16 est, en outre, configuré pour fournir, au cours de l'étape de détection ouverte, et en entrée d'un modèle de détection d'objets ouverte, l'image courante augmentée du résultat de la segmentation mise en œuvre durant l'étape d'identification 30 (c'est-à-dire l'image courante associée à un masque indicatif de la voie 4 détectée).

Une telle caractéristique est avantageuse dans la mesure où la connaissance des limites identifiées de la voie 4 évite la détection d'objets apparaissant sur l'image mais non présents sur la voie et, par conséquent, non susceptibles de constituer un quelconque danger du point du véhicule. En outre, le modèle de détection d'objets ouverte n'est pas un détecteur d'anomalie mais un détecteur d'objet : il en résulte une complémentarité entre, d'une part, les étapes 32 et 36 (détection négative d'un écart par rapport à une situation normale), et, d'autre part, l'étape 42 (détection positive d'un objet sur la voie).

Par « modèle de détection d'objets ouverte », il est entendu, au sens de la présente invention, un modèle d'apprentissage automatique (« *machine learning* » en anglais) configuré pour détecter des objets au-delà d'objets prédéfinis lors de l'entrainement dudit modèle. En d'autres termes, un modèle de détection d'objets ouverte correspond à tout modèle configuré pour réaliser une détection exhaustive par construction.

En particulier, contrairement à des détecteurs très fréquemment utilisés (comme YOLO), qui sont limités dans leurs détections aux catégories du jeu de données d'entrainement, un modèle de détection d'objets ouverte est configuré pour détecter des objets au-delà des classes sur lesquelles il a été entrainé. Cela peut se faire en détectant également des objets inconnus (cas d'un modèle « *open-set object detector* » apte à mettre en œuvre une méthode dite « *Open Set Object Detection* ») ou par d'autres moyens, tels que le langage (cas du modèle YOLO-Open World).

Par exemple, le modèle de détection d'objets ouverte est un détecteur d'objets Open Set (« *open-set object detector* »).

Un tel détecteur d'objets Open Set est, par exemple, décrit par Jiaming Han et al., dans la prépublication digitale « *Expanding Low-Density Latent Regions for Open-Set Object Detection* », référencée arXiv:2203.14911.

De préférence, le modèle de détection d'objets ouverte a été préalablement entraîné sur la base d'un troisième jeu de données d'entraînement comprenant une pluralité d'images représentatives d'un nombre très important d'objets usuels (humains, voitures, trains, animaux, etc.) et/ou d'objets susceptibles de former des obstacles sur une voie, voire d'obstacles réellement rencontrés (percutés ou non). Dans ce cas, chaque image est associée à une étiquette indicative de la classe à laquelle appartient l'objet représenté sur ladite image.

En outre, le modèle de détection d'objets ouverte est configuré pour délivrer, en sortie, à partir d'une image (en l'occurrence, l'image courante) fournie à son entrée :
- une boîte englobante correspondant à un objet détecté (par exemple, une anomalie 52) dans la région d'intérêt 50 ; et
- une classe associée à ladite boîte englobante, et indicative d'une classe de l'objet détecté dans ladite boîte englobante, à savoir :
   - une classe d'objets connus non critiques, issue du troisième jeu de données d'entraînement ;
   - une classe d'objets connus critiques, issue du troisième jeu de données d'entraînement ; ou
   - une classe d'objets inconnus, parmi au moins une classe homogène d'objets inconnus (au regard d'une métrique d'homogénéité prédéterminée), considérée comme critique par défaut.

### Etape de consolidation de détection ouverte 44

De préférence, dans le cas où le modèle de détection d'objets ouverte détecte un objet dans l'image courante, le dispositif informatique 16 est configuré pour mettre en œuvre l'étape 44 de consolidation de détection ouverte afin de consolider la détection ouverte dudit objet (c'est-à-dire vérifier que ladite détection ouverte soit certifiable au regard d'au moins un critère prédéterminé). En particulier (mais de façon non exclusive), le dispositif informatique 16 est configuré pour mettre en œuvre l'étape 44 si, à l'issue de l'étape de détection ouverte 42, l'objet détecté appartient à la classe d'objets inconnus ou à la classe d'objets connus critiques.

Plus précisément, le dispositif informatique 16 est configuré pour calculer une boîte englobante de confiance.

Une telle boîte englobante de confiance correspond à la partie de l'image courante dans laquelle la détection de l'objet, par le modèle de détection d'objets ouverte, présente un niveau de confiance de détection ouverte prédéterminé (issu d'une qualification préalable du modèle de détection d'objets ouverte).

Par exemple, le niveau de confiance de détection ouverte prédéterminé vaut 95%.

Dans ce cas, le dispositif informatique 16 est configuré pour déterminer que la détection ouverte de l'objet est consolidée si l'objet détecté est inclus dans la boîte englobante de confiance

En alternative, ou de façon complémentaire, le dispositif informatique 16 est configuré pour calculer une zone d'explicabilité de détection ouverte, à partir d'une carte d'explicabilité de détection ouverte relative à la détection de l'objet (dans l'image courante) par le modèle de détection d'objets ouverte.

Dans ce cas, la carte d'explicabilité est une carte indicative de la contribution de chaque élément de l'image (pixels, attributs, etc.) dans la détection de l'objet par le modèle de détection d'objets ouverte. Comme indiqué précédemment, une telle carte d'explicabilité est susceptible de correspondre à une carte dite « *saliency map* », ou encore à une carte dite « *contribution map* », connues de l'homme du métier.

Par exemple, afin d'obtenir la zone d'explicabilité de détection ouverte, le dispositif informatique 16 est configuré pour mettre en œuvre un traitement comprenant :
- une extraction, en sortie du modèle de détection d'objets ouverte, de la carte d'explicabilité de détection ouverte relative à la détection de l'objet (dans l'image courante) par le modèle de détection d'objets ouverte ; et
- un calcul, à partir de la carte d'explicabilité de détection ouverte extraite, de la zone d'explicabilité de détection ouverte correspondante.

Dans ce cas, la zone d'explicabilité de détection ouverte est définie comme la partie de la carte d'explicabilité de détection ouverte pour laquelle la contribution à la détection de l'objet, par le modèle de détection d'objets ouverte, est supérieure à un seuil de contribution de détection ouverte prédéterminé.

En variante, la zone d'explicabilité de détection ouverte est une sortie du modèle de détection d'objets ouverte.

En outre, la détection de l'objet par le modèle de détection d'objets ouverte est considérée comme consolidée si un score de proximité, au regard d'une métrique de proximité prédéterminée, entre la boîte englobante associée à l'objet détecté et la zone d'explicabilité de détection ouverte calculée est supérieur à un seuil de proximité de détection ouverte prédéterminé.

Un tel score de proximité est, par exemple, obtenu en utilisant l'une quelconque des fonctions décrites précédemment en relation avec la consolidation de la détection d'anomalie.

Une telle étape de consolidation de détection est avantageuse, dans la mesure où, par la production de données explicatives du processus de décision lors de la détection ouverte, elle autorise une éventuelle certification (ou homologation) du dispositif informatique 16, ce qui est un prérequis en fonction sécuritaire.

### Etape de fusion 46

De préférence, le dispositif informatique 16 est configuré pour comparer, au cours de l'étape de fusion 46, les résultats obtenus à l'issue de chacune des étapes de classification 36 et de détection ouverte 42.

En particulier, le dispositif informatique 16 est configuré pour déterminer une cohérence entre d'une part, les résultats de la détection d'anomalie et de la classification d'anomalie, et, d'autre part, les résultats de la détection ouverte. En particulier, le dispositif informatique 16 est configuré pour déterminer une correspondance entre l'objet détecté et l'anomalie détectée. En outre, le dispositif informatique 16 est configuré pour déterminer une correspondance entre le caractère critique (ou non) de l'objet et de l'anomalie détectés.

De préférence, le dispositif informatique 16 est configuré pour déterminer une proximité par localisation entre les résultats fournis par le modèle de détection d'anomalie et le modèle de détection d'objets ouverte. Un tel calcul repose, notamment, sur un calcul de distance entre l'anomalie détectée par le modèle de détection et la boîte englobante déterminée par le modèle de détection d'objets ouverte.

En alternative, ou de façon complémentaire, le dispositif informatique 16 est configuré pour déterminer une proximité par apparence entre les résultats fournis par le modèle de détection d'anomalie et le modèle de détection d'objets ouverte. Un tel calcul repose, notamment, sur un calcul de similarité visuelle (forme, texture, couleur, etc.) entre l'anomalie détectée par le modèle de détection et le contenu de la boîte englobante déterminée par le modèle de détection d'objets ouverte.

En alternative, ou de façon complémentaire, le dispositif informatique 16 est configuré pour déterminer une proximité par explicabilité entre les résultats fournis par le modèle de détection d'objets ouverte et le modèle de détection d'anomalie ou le modèle de classification. Un tel calcul repose, notamment, sur un calcul de similarité et/ou de proximité par localisation entre les cartes d'explicabilités fournies par le modèle de détection d'objets ouverte et le modèle de détection d'anomalie ou le modèle de classification.

En alternative, ou de façon complémentaire, le dispositif informatique 16 est configuré pour déterminer une cohérence des prédictions conformes entre les résultats fournis par le modèle de détection d'anomalie et le modèle de détection d'objets ouverte. Un tel calcul repose, notamment, sur un calcul de distance entre la zone de confiance de détection et la boîte englobante de confiance, ou encore sur leur recouvrement.

De préférence, dans le cas d'une cohérence des détections, et si la classe associée à la boîte englobante déterminée par le modèle de détection d'objets ouverte est la classe d'objets inconnus, le dispositif informatique 16 est, de préférence, configuré pour enrichir la classe des objets connus critiques avec l'anomalie 52 détectée. Dans ce cas, l'anomalie est associée à une étiquette correspondante (indicative du type d'objet, ou encore de la nature de l'anomalie).

En outre, le dispositif informatique 16 est configuré pour associer un attribut à l'anomalie détectée, en fonction d'une sortie du modèle de détection d'objets ouverte. Un tel attribut est, notamment, représentatif d'un degré de confiance dans la détection de l'obstacle.

Un tel degré de confiance est, en particulier, d'autant plus grand que :
- la détection d'anomalie est consolidée ;
- la classification est consolidée ;
- la détection ouverte est consolidée ; et
- les résultats de la classification et de la détection ouverte sont cohérents entre eux.

### Etape d'alerte 40

Dans le cas où il est déterminé que l'anomalie 52 appartient à la classe critique, le dispositif informatique 16 est configuré pour générer, au cours de l'étape d'alerte 40, un signal d'alerte indicatif de la présence d'un obstacle sur la voie 4.

Un tel signal d'alerte est, par exemple, un signal à destination d'un dispositif de freinage du véhicule, pour commander un arrêt du véhicule, ou encore un signal à destination d'un calculateur du véhicule ou d'un poste de commande centralisé.

De préférence, si l'étape de fusion est mise en œuvre, le dispositif informatique 16 est, en outre, configuré pour intégrer, dans le signal d'alerte, l'attribut représentatif du niveau de confiance dans la détection de l'obstacle.

De préférence, si le niveau d'innocuité de l'anomalie critique a été déterminé, le dispositif informatique 16 est, en outre, configuré pour inclure, dans le signal d'alerte, le niveau d'innocuité déterminé.

### Fonctionnement

Le fonctionnement du dispositif informatique 16 va maintenant être décrit en référence à la figure 1.

Le dispositif informatique 16 reçoit une image courante, par exemple extraite d'un flux vidéo représentatif d'une voie acquise par la caméra 26.

De préférence, au cours de l'étape d'identification 30, le dispositif informatique 16 identifie la partie de l'image courante qui correspond à la voie 4. La partie identifiée forme la région d'intérêt 50.

Puis, au cours de l'étape de détection d'anomalie 32, le dispositif informatique 16 met en œuvre le modèle de détection d'anomalie pour détecter la présence ou non, dans l'image courante (et de préférence dans la région d'intérêt 50 identifiée), d'un élément formant une anomalie 52.

Dans le cas où une anomalie est détectée, le dispositif informatique 16 met avantageusement en œuvre l'étape 34 de consolidation de détection d'anomalie afin de consolider ou non la détection de l'anomalie 52.

En outre, dans le cas où l'anomalie 52 est détectée, alors, durant l'étape de classification 36, le dispositif informatique 16 détermine l'appartenance ou non de l'anomalie 52 détectée à une classe critique.

Puis, le dispositif informatique 16 met avantageusement en œuvre l'étape 38 de consolidation de classification afin de consolider ou non la classification de l'anomalie 52.

Avantageusement, au cours de l'étape de détection ouverte 42, le dispositif informatique 16 fournit, en entrée du modèle de détection d'objets ouverte, l'image courante, de préférence augmentée de l'indication de la région d'intérêt 50.

Il en résulte notamment, si un objet est détecté dans la région d'intérêt 50 :
- une boîte englobante correspondant à l'objet détecté ; et
- une classe associée à ladite boîte englobante, et indicative d'une classe de l'objet détecté dans ladite boîte englobante, à savoir une classe d'objets connus non critiques, une classe d'objets connus critiques, ou encore une classe d'objets inconnus (considérée comme critique par défaut).

Puis, de préférence, le dispositif informatique 16 met en œuvre l'étape 44 de consolidation de détection ouverte afin de consolider ou non la détection ouverte dudit objet.

Puis, de préférence, au cours de l'étape de fusion 46, le dispositif informatique 16 compare les résultats obtenus à l'issue de chacune des étapes de classification 36 et de détection ouverte 42, en particulier pour déterminer une cohérence entre d'une part, les résultats de la détection d'anomalie et de la classification d'anomalie, et, d'autre part, les résultats de la détection ouverte.

En outre, le dispositif informatique 16 associe un attribut à l'anomalie détectée, en fonction d'une sortie du modèle de détection d'objets ouverte. Un tel attribut est, notamment, représentatif d'un degré de confiance dans la détection de l'obstacle.

Puis, au cours de l'étape d'alerte 40, dans le cas où il est déterminé que l'anomalie 52 appartient à la classe critique, le dispositif informatique 16 génère un signal d'alerte indicatif de la présence d'un obstacle sur la voie 4.

De préférence, si l'étape de fusion est mise en œuvre, le dispositif informatique 16 intègre, dans le signal d'alerte, l'attribut représentatif du niveau de confiance dans la détection de l'obstacle.

Bien entendu l'invention n'est pas limitée aux exemples qui viennent d'être décrits.

## Revendications

1. Procédé (2) de détection d'obstacle sur une voie (4), le procédé étant mis en œuvre par ordinateur et comprenant, pour au moins une image courante représentative de la voie, les étapes :
- mise en œuvre (32) d'un modèle de détection d'anomalie pour détecter la présence ou non, dans une région d'intérêt (50) de l'image courante, d'un élément formant une anomalie ;
- en cas de détection d'une anomalie, mise en œuvre (36) d'un algorithme de classification pour déterminer l'appartenance ou non de l'anomalie détectée à une classe critique, par la mise en œuvre d'au moins un traitement prédéterminé, l'anomalie étant considérée comme appartenant à la classe critique si l'algorithme de classification détermine que l'anomalie n'appartient à aucune parmi au moins une classe d'objet connu non critique prédéterminée ;
- s'il est déterminé que l'anomalie détectée appartient à la classe critique, génération (40) d'un signal d'alerte indicatif de la présence d'un obstacle sur la voie (4).

2. Procédé selon la revendication 1, comprenant, préalablement à l'étape de mise en œuvre du modèle de détection d'anomalie, une étape (30) d'identification de la partie de l'image courante correspondant à la voie (4), la partie identifiée formant la région d'intérêt (50).

3. Procédé selon la revendication 1 ou 2, comprenant, en outre, après l'étape de mise en œuvre du modèle de détection d'anomalie, une étape (34) de consolidation de la détection d'anomalie comportant :
- un calcul d'une zone de confiance correspondant à la partie de l'image courante dans laquelle la détection de l'anomalie, par le modèle de détection d'anomalie, présente un niveau de confiance de détection prédéterminé ; et/ou
- un calcul d'une zone d'explicabilité de détection, à partir d'une carte d'explicabilité de détection indicative de la contribution de chaque élément de l'image dans la détection de l'anomalie ;
la détection de l'anomalie étant considérée comme consolidée si :
- l'anomalie détectée est incluse dans la zone de confiance calculée ; et/ou
- un score de proximité, au regard d'une métrique de proximité prédéterminée, entre l'anomalie détectée et la zone d'explicabilité de détection calculée est supérieur à un seuil de proximité de détection prédéterminé.

4. Procédé selon l'une quelconque des revendications 1 à 3, comprenant, si l'anomalie (52) détectée appartient à la classe critique :
- une détermination, à partir de l'image courante, d'un niveau d'innocuité de l'anomalie détectée ; et
- une inclusion du niveau d'innocuité déterminé dans le signal d'alerte.

5. Procédé selon l'une quelconque des revendications 1 à 4, dans lequel l'algorithme de classification est un modèle de classification, le procédé comprenant, en outre, après la mise en œuvre de l'algorithme de classification, une étape (38) de consolidation de classification comportant :
- un calcul d'un ensemble de classes de confiance, correspondant aux classes pour lesquelles une classification de l'anomalie détectée dans l'une desdites classes de confiance, par le modèle de classification, présente un niveau de confiance de classification prédéterminé ; et/ou
- un calcul d'une zone d'explicabilité de classification, à partir d'une carte d'explicabilité de classification indicative de la contribution de chaque élément de l'image dans la classification de l'anomalie (52) ;
la classification de l'anomalie étant considérée comme consolidée si :
- la classe affectée à l'anomalie détectée appartient à l'ensemble de classes de confiance ; et/ou
- un score de proximité, au regard d'une métrique de proximité prédéterminée, entre l'anomalie (52) détectée et la zone d'explicabilité de classification calculée est supérieur à un seuil de proximité de classification prédéterminé.

6. Procédé selon l'une quelconque des revendications 1 à 5, comprenant, en outre, les étapes :
- mise en œuvre (42) d'un modèle de détection d'objets ouverte pour détecter la présence ou non d'un objet dans la région d'intérêt (50) de l'image courante ;
- si un objet est détecté par le modèle de détection d'objets ouverte, et une anomalie est détectée par le modèle de détection d'anomalie, comparaison d'au moins une caractéristique de l'objet détecté à au moins une caractéristique correspondante de l'anomalie détectée ; et
- association d'un attribut à l'anomalie (52) détectée, en fonction d'un résultat de la comparaison.

7. Procédé selon la revendication 6, dans lequel, si l'anomalie détectée appartient à la classe critique, l'attribut associé à l'anomalie est représentatif d'un degré de confiance dans la détection de l'anomalie (52) en tant qu'obstacle.

8. Procédé selon la revendication 6 ou 7, comprenant, en outre, en cas de détection d'un objet par le modèle de détection d'objets ouverte :
- un calcul d'une boîte englobante de confiance, correspondant à la partie de l'image courante dans laquelle la détection de l'objet, par le modèle de détection d'objets ouverte, présente un niveau de confiance de classification prédéterminé ; et/ou
- un calcul d'une zone d'explicabilité de détection ouverte, à partir d'une carte d'explicabilité de détection ouverte indicative de la contribution de chaque élément de l'image dans la détection de l'objet ;
la détection de l'objet étant considérée comme consolidée si :
- l'objet détecté est inclus dans la boîte englobante de confiance ; et/ou
- un score de proximité, au regard d'une métrique de proximité prédéterminée, entre la boîte englobante associée à l'objet détecté et la zone d'explicabilité de détection ouverte calculée est supérieur à un seuil de proximité de détection ouverte prédéterminé.

9. Programme d'ordinateur comprenant des instructions exécutables qui, lorsqu'elles sont exécutées par ordinateur, mettent en en œuvre les étapes du procédé selon l'une quelconque des revendications 1 à 8.

10. Dispositif informatique (16) pour la détection d'obstacle sur une voie (4), configuré de façon à, pour au moins une image courante représentative de la voie (4) :
- mettre en œuvre (32) un modèle de détection d'anomalie pour détecter la présence ou non, dans une région d'intérêt (50) de l'image courante, d'un élément formant une anomalie (52) ;
- en cas de détection d'une anomalie (52), mettre en œuvre (36) un algorithme de classification pour déterminer l'appartenance ou non de l'anomalie (52) détectée à une classe critique, par la mise en œuvre d'au moins un traitement prédéterminé, l'anomalie (52) étant considérée comme appartenant à la classe critique si l'algorithme de classification détermine que l'anomalie n'appartient à aucune parmi au moins une classe d'objet connu non critique prédéterminée ;
- s'il est déterminé que l'anomalie (52) détectée appartient à la classe critique, générer (40) un signal d'alerte indicatif de la présence d'un obstacle sur la voie.
